# EUROPEAN PATENT SPECIFICATION

(11) **EP 4 481 216 B1**
(45) Date of publication and mention of the grant of the patent: **06.05.2026**
(21) Application number: 23752876.5
(22) Date of filing: 07.02.2023
(51) Int. Cl.: F16C 33/38, F16C 19/06, F16C 33/41

(54) **RESIN-MADE BALL BEARING RETAINER AND BALL BEARING**
AUS HARZ HERGESTELLTER KUGELLAGERKÄFIG UND KUGELLAGER
CAGE DE ROULEMENT À BILLES ET ROULEMENT À BILLES

(30) Priority: 14.02.2022 JP 2022020600
(43) Date of publication of application: 25.12.2024
(73) Proprietor: NSK Ltd., Tokyo 141-8560 (JP)
(72) Inventor: SUZUKI Hironori, Fujisawa-shi, Kanagawa 251-8501 (JP); OKAZAKI Yamato, Fujisawa-shi, Kanagawa 251-8501 (JP)
(74) Representative: Grünecker Patent- und Rechtsanwälte PartG mbB
(86) International application number: PCT/JP2023/004068
(87) International publication number: WO 2023/153412

(56) References cited:
- WO-A1-99/01676
- CN-A- 107 676 386
- DE-A1- 102015 214 851
- JP-A- 2001 140 870
- JP-A- 2008 256 152
- US-A1- 2020 224 720

## Description

### TECHNICAL FIELD

The present invention relates to a resin cage for a ball bearing and a ball bearing, and for example, relates to a resin cage for a ball bearing and a ball bearing used in a dental air turbine, a cleaner, an electric tool, or the like in high-speed rotation.

### BACKGROUND ART

In general, a resin cage applied to a ball bearing is produced by injection molding. Specifically, the cage is produced by forming a ring-shaped cavity corresponding to the cage in a mold, injecting a molten resin material (thermoplastic resin) from a resin injection gate provided in a peripheral edge portion of the cavity, cooling and solidifying the resin material.

Patent Literature 1 discloses, as a resin cage, a crown cage including a spherical pocket and a double circular ring cage including a cylindrical pocket. In addition, in an angular contact ball bearing disclosed in Patent Literature 2, there is disclosed a resin cage including a pocket in which a cylindrical portion and a diameter-reduced portion are combined.

### CITATION LIST

### PATENT LITERATURE

Patent Literature 1: JP2020-46069A
Patent Literature 2: JPH07-4439A Z P Patent Literature 3: DE 10 2015 214851 A1

### SUMMARY OF INVENTION

### TECHNICAL PROBLEM

In the resin cages disclosed in Patent Literatures 1, 2 and 3, it is generally indicated that pockets are equally distributed in a circumferential direction, but in practice, angles between the pockets vary, and the equal distribution is extremely slightly disrupted.

In a case of a cylindrical pocket, it is generally indicated that a center of each pocket is also oriented to a bearing center, but in practice, the center of each pocket is oriented to the bearing center with the center of each pocket oriented in varying directions.

For this reason, when the resin cage having variations in pocket disposition angles and pocket orientations as described above is used in high-speed rotation of, for example, dmn 1,000,000 or more, vibration of the cage may be large and a bearing life may be shortened.

The present invention has been made in view of the above-described problems, and an object thereof is to provide a resin cage for a ball bearing and a ball bearing that can reduce vibration of a cage during bearing rotation and improve a bearing life.

### SOLUTION TO PROBLEM

The above object of the present invention is obtained by a resin cage according to appended claim 1.

### ADVANTAGEOUS EFFECTS OF INVENTION

According to the resin cage for a ball bearing and the ball bearing according to the present invention, the roundness of the guide surface is 5 µm or less, the differences between the angles formed by the centers of the adjacent pockets and 360°/number of pockets are all within ± 0.1°, and the orientations of the centers of all the pockets are oriented to the one side in the circumferential direction and the one side in the axial direction from the outer diameter side toward the inner diameter side, whereby vibration of the cage during bearing rotation can be reduced and a bearing life can be improved.

### BRIEF DESCRIPTION OF DRAWINGS

FIG. 1 is a vertical cross-sectional view of a main portion of a deep groove ball bearing in which a double circular ring cage according to a first embodiment of the present invention is incorporated.
FIG. 2 is a perspective view of the double circular ring cage shown in FIG. 1.
FIG. 3 is a schematic view showing a pocket orientation of the double circular ring cage.
FIGS. 4A to 4D are schematic views showing four aspects of the pocket orientation of the double circular ring cage.
FIG. 5 is a schematic view of the double circular ring cage, which shows a pocket equal distribution angle difference between pockets and the pocket orientation.
FIG. 6 is a graph showing the pocket equal distribution angle difference between pockets in three cages according to the present embodiment.
FIG. 7 is an unfolded view of the double circular ring cage showing a variation in bottom thicknesses of pockets.
FIG. 8 is a schematic view of a double circular ring cage according to a comparative example, which shows a pocket equal distribution angle difference between pockets and a pocket orientation.
FIG. 9 is a graph showing the pocket equal distribution angle difference between pockets in three cages as comparative examples.
FIG. 10 is a graph showing a relationship between a roundness and a rotation life time.
FIG. 11 is a graph showing a relationship between a maximum value of the pocket equal distribution angle difference between pockets, the number of pocket misorientations, and the rotation life time.
FIG. 12 is a graph showing a relationship between a maximum value of a pocket orientation angle and the rotation life time.
FIG. 13 is a perspective view of a crown cage as a modification.

### DESCRIPTION OF EMBODIMENTS

Hereinafter, a resin cage for a ball bearing and a ball bearing in which the resin cage is incorporated according to an embodiment of the present invention will be described in detail with reference to the drawings.

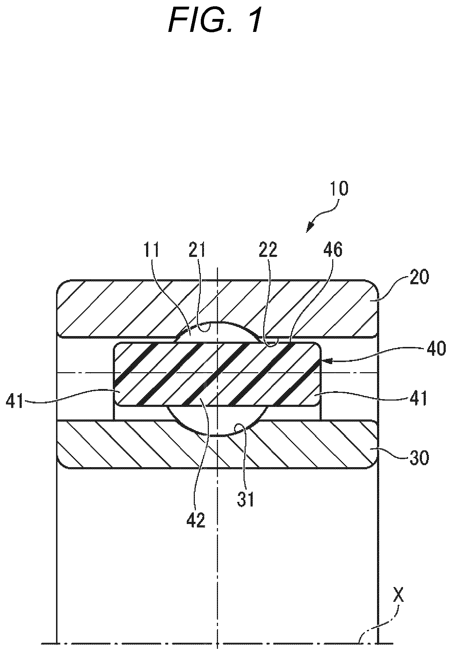

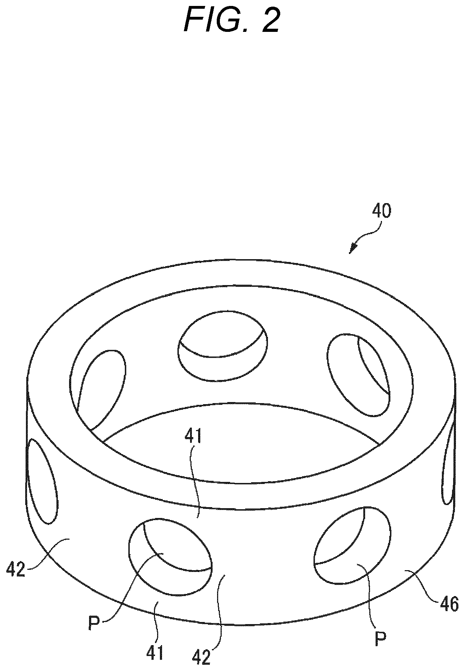

As shown in FIG. 1, a deep groove ball bearing 10 according to the present embodiment includes an outer ring 20 whose inner circumferential surface is formed with an outer ring raceway groove 21, an inner ring 30 whose outer circumferential surface is formed with an inner ring raceway groove 31, a plurality of balls 11 rollably disposed between the outer ring raceway groove 21 and the inner ring raceway groove 31, and a double circular ring cage 40 that is a resin cage including a plurality of cylindrical pockets P (see FIG. 2) rotatably holding the balls 11, respectively.

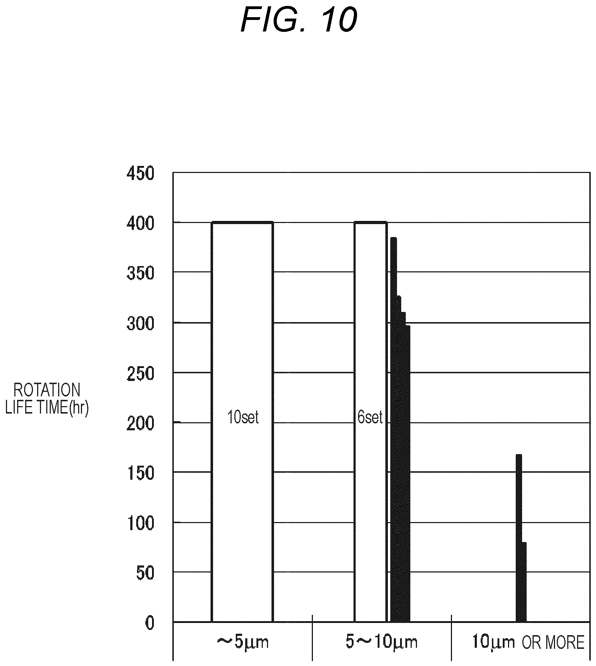

As shown in FIG. 2, the double circular ring cage 40 includes a pair of circular ring portions 41 facing each other in an axial direction, and a plurality of (seven in the embodiment shown in FIG. 10) column portions 42, which extend in the axial direction of the pair of circular ring portions 41 to connect the pair of circular ring portions 41 and are disposed at equal intervals in a circumferential direction. Each pocket P is formed by adjacent column portions 42 and the pair of circular ring portions 41. The double circular ring cage 40 is of an outer ring guide type. Outer circumferential surfaces 46 of the pair of circular ring portions 41 are guided by an inner circumferential surface 22 of a shoulder portion of the outer ring 20.

The double circular ring cage 40 may be produced by cutting or injection molding.

As a resin material of the double circular ring cage 40, a resin composition obtained by adding 10 wt% to 50 wt% of a reinforcing fiber material (for example, glass fiber or carbon fiber) to a synthetic resin, for example, a polyamide resin such as 46 nylon or 66 nylon, polybutylene terephthalate, polyphenylene sulfide (PPS), polyether ether ketone (PEEK), polyether nitrile (PEN), or polyethylene terephthalate (PET) is used.

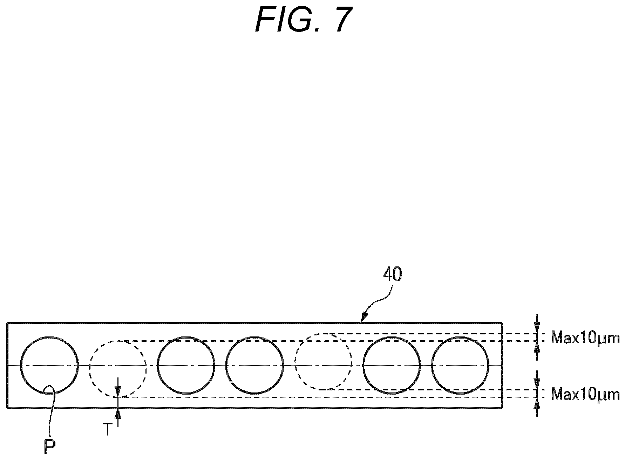

Here, the double circular ring cage 40 according to the present embodiment is configured to satisfy all of the following conditions (i) to (iii) and preferably further satisfy at least one of the following conditions (iv) to (vi) in order to reduce vibration of the cage 40 during bearing rotation and improve a bearing life even when used under a high-speed rotation condition of dmn 1,000,000 or more.
(i) A roundness of the outer circumferential surface 46 as a guide surface is 5 µm or less.
(ii) Differences between angles formed by centers C of adjacent pockets P and 360°/number of pockets (in the present specification, also referred to as "pocket equal distribution angle differences between the pockets P") are all within ± 0.1°.
(iii) Orientations of the centers C of all the pockets P are oriented to one side in the circumferential direction and one side in the axial direction from an outer diameter side toward an inner diameter side.
(iv) The orientations of the centers C of all the pockets P are within 1°.
(v) A sum of differences between angles, which are formed by the center C of any one pocket P and the centers C of pockets P adjacent thereto on both sides, and 360°/number of pockets is within ± 0.1°.
(vi) A variation in bottom thicknesses T (that is, a minimum distance between a side surface of the cage 40 on the one side in the axial direction and each pocket P) of the pockets P is 10 µm or less (see FIG. 7).

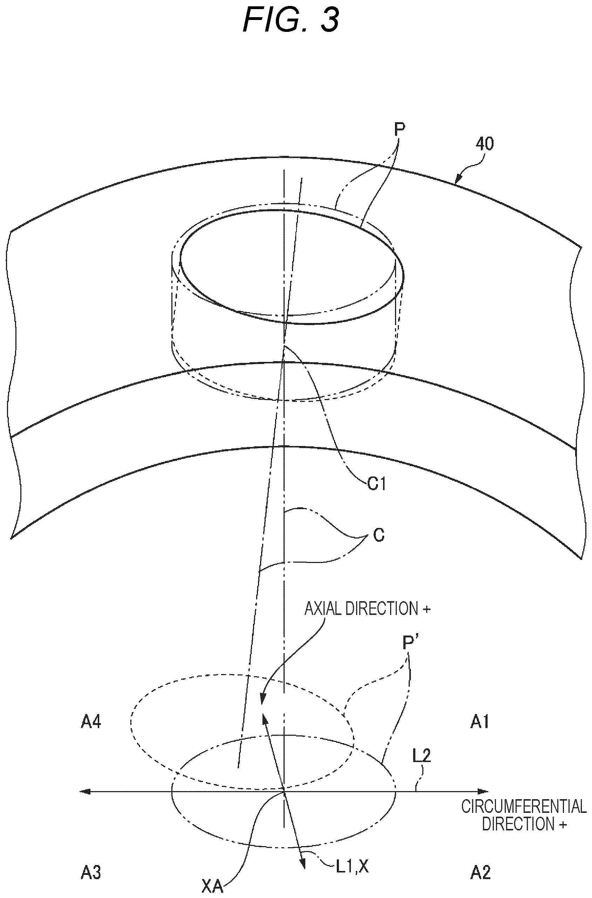

With respect to the condition (iii), the center C of each pocket P is designed to be oriented from the outer diameter side toward the inner diameter side, as indicated by a two-dot dash line in FIG. 3, and intersect with a rotation axis center X (see FIG. 1) of the ball bearing 10 with an axial position of the center C being unchanged over a radial direction.

That is, on a plane passing through the rotation axis center X and orthogonal to the center C of the pocket P in design, assuming that the rotation axis center X is a first axis L 1 and an axis passing through the axial position of the center C and orthogonal to the rotation axis center X is a second axis L2, the pocket P is projected as a pocket P' with the center C of the pocket P passing through an intersection XA between the first axis L1 and the second axis L2 when the pocket P in design is projected from the outer diameter side.

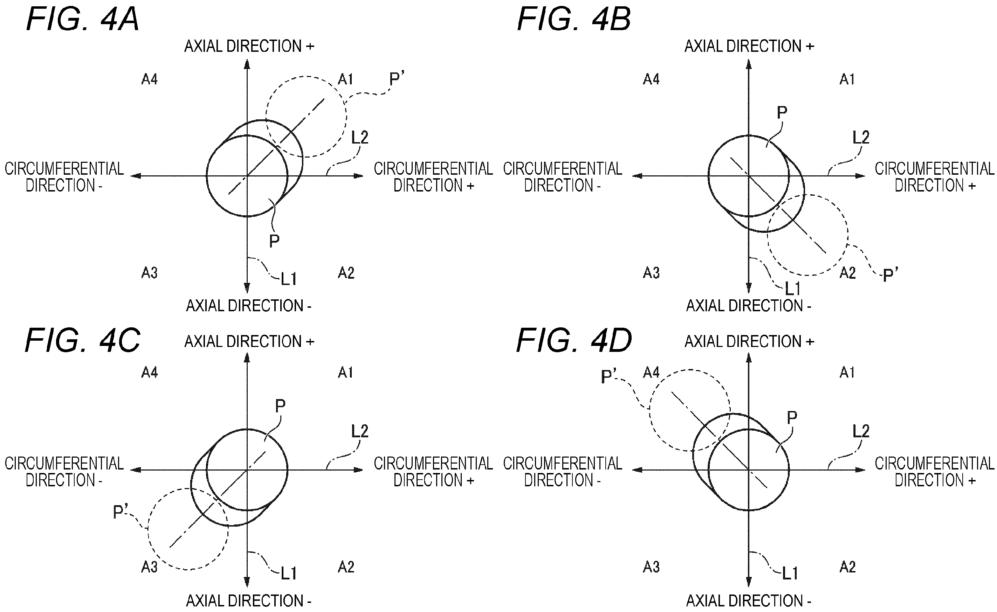

However, in a general cage, the orientation of the center C of the pocket P is deviated, strictly speaking, from the intersection XA between the first axis L1 and the second axis L2 from the outer diameter side to the inner diameter side as shown by a one-dot dash line in FIG. 3, and the pocket P is projected as a pocket P' shown by a dotted line on the plane including the first axis L 1 and the second axis L2 That is, as shown in FIGS. 4A to 4D, the orientation of the center C of the pocket P varies toward any one of the four areas A1 to A4 with the first axis L1 and the second axis L2 serving as boundaries with reference to an outer diameter side opening of the pocket P.

On the other hand, in the present embodiment, the pockets P are formed such that the orientations of the centers C of all the pockets P are oriented toward one of the four areas A1 to A4.

With respect to the condition (iv), it is indicated that the orientations of the centers C of all the pockets P intersect, within 1°, a straight line connecting the intersection XA between the first axis L1 and the second axis L2 and a center position (a position where the center C of each pocket P intersects a pitch circle diameter of the ball 11) C1 of the ball 11.

That is, in FIG. 3, in a plane including the orientation of the center C (an axis line of the center C) of the pocket P in design, which is indicated by the two-dot dash line, and the orientation of the center C (the axis line of the center C) of the pocket P, which is indicated by the one-dot dash line, an angle formed by the two axis lines of the centers C is within 1°.

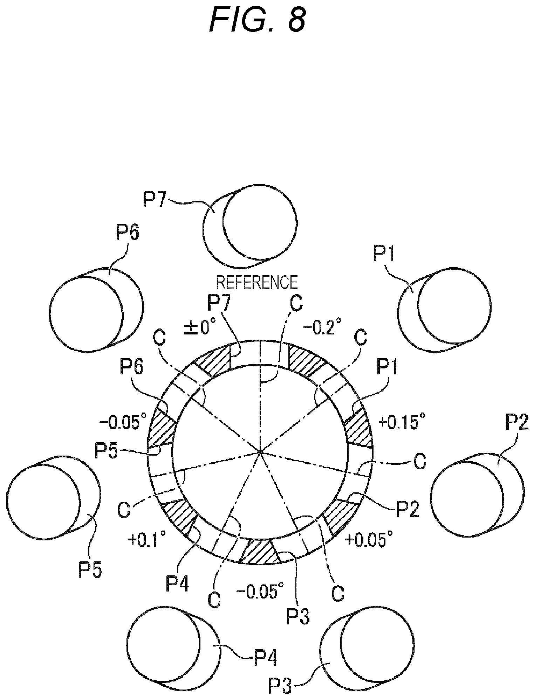

For example, in the double circular ring cage 40 including the seven pockets P (P1 to P7) shown in FIG. 2, in a general cage as a comparative example, as shown in FIG. 8, the orientations are formed with a variation such that orientations of the centers C of the pockets P1, P3, and P7 are oriented toward the area A3 that is negative in the circumferential direction and negative in the axial direction, orientations of the centers C of the pockets P2, P5, and P6 are oriented toward the area A1 that is positive in the circumferential direction and positive in the axial direction, and an orientation of the center C of the pocket P4 is oriented toward the area A2 that is positive in the circumferential direction and negative in the axial direction.

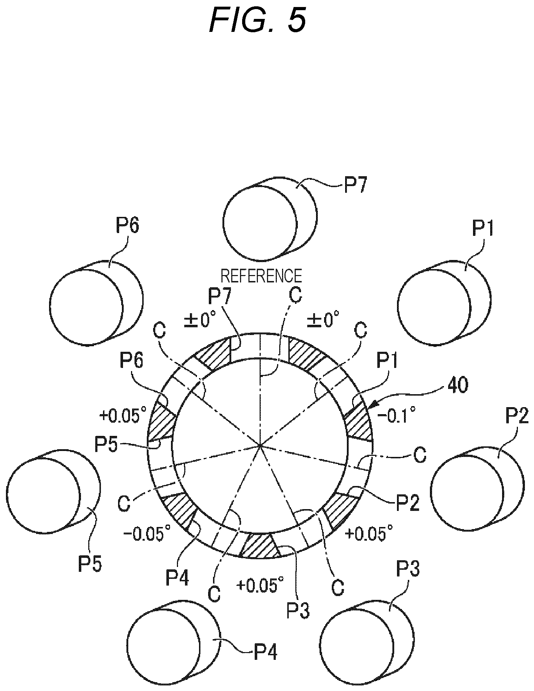

On the other hand, in the cage according to the present embodiment, as shown in FIG. 5, the pockets P1 to P7 are formed such that the orientations of the centers C of all the pockets P1 to P7 are toward the area A1 that is positive in the circumferential direction and positive in the axial direction.

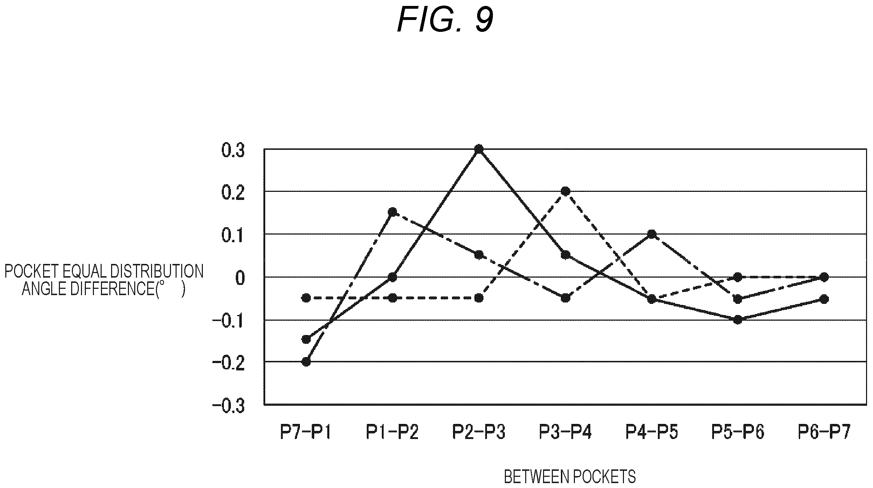

With respect to the condition (ii), in the general cage as the comparative example, as in three examples shown in FIG. 9, pocket equal distribution angle differences between pockets P7-P1 to P6-P7 exceed a range of ± 0.1 at any position.

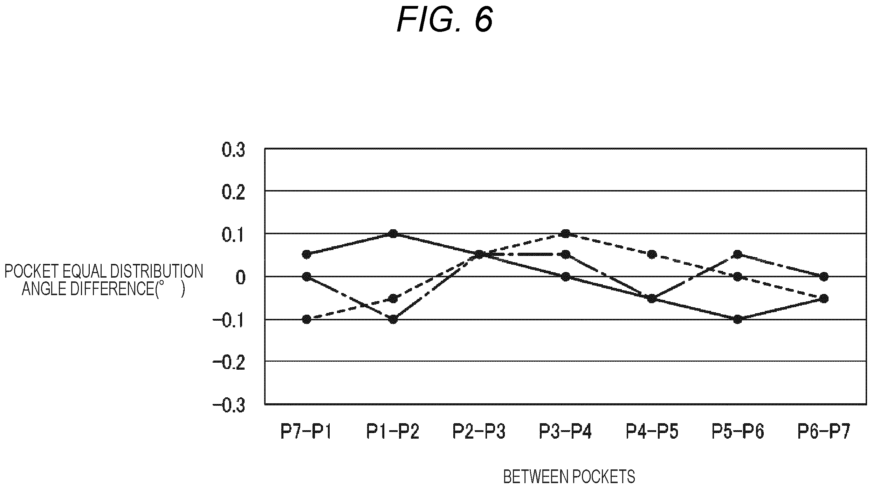

On the other hand, in the present embodiment, as in three examples shown in FIG. 6, the pocket equal distribution angle differences between pockets P7-P1 to P6-P7 are within the range of ± 0.1 at any position.

In graphs in FIGS. 6 and 9, one-dot dash lines correspond to the pocket equal distribution angle differences between pockets P7-P1 to P6-7 in the cage shown in FIGS. 5 and 8.

Next, with respect to the conditions (i) to (iv), an evaluation bearing was incorporated into a dental air turbine, and a test related to a rotation life time was performed under the following test conditions.

### (Test Conditions)

· Dimension of used bearing: inner diameter φ 3.175 mm × outer diameter φ 6.35 mm × width 2.38 mm
   ·Number of rotations: 400,000 rotations
   ·Bearing preload: 5 N (± 1 N)
· Life determination criterion: a life was defined as a time point when the initial 400,000 rotations decreased to 360,000 rotations.

FIG. 10 shows test results when a roundness of the guide surface was changed with respect to the condition (i) in cages satisfying the conditions (ii) to (vi). As can be seen from the results, as long as the roundness of the guide surface is 5 µm or less, the cages can all be used without breaking the cages up to a predetermined rotation life time (400 hours).

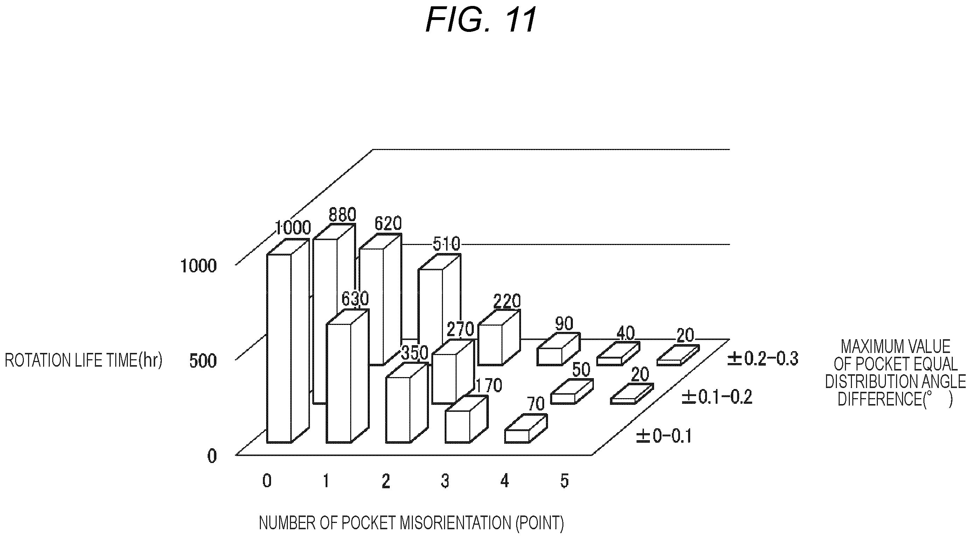

FIG. 11 shows test results in a case where a maximum value of the pocket equal distribution angle difference between pockets is changed with respect to the condition (ii) and the number of pocket misorientations is changed with respect to the condition (iii) in cages satisfying the conditions (i), (iv), and (vi). As can be seen from the results, in a case where the roundness of the guide surface is 5 µm or less, the maximum value of the pocket equal distribution angle difference between pockets is within ± 0.1°, and all the pockets are oriented toward one side in the circumferential direction and one side in the axial direction, the cages can be used without breaking up to a predetermined rotation life time (1000 hours).

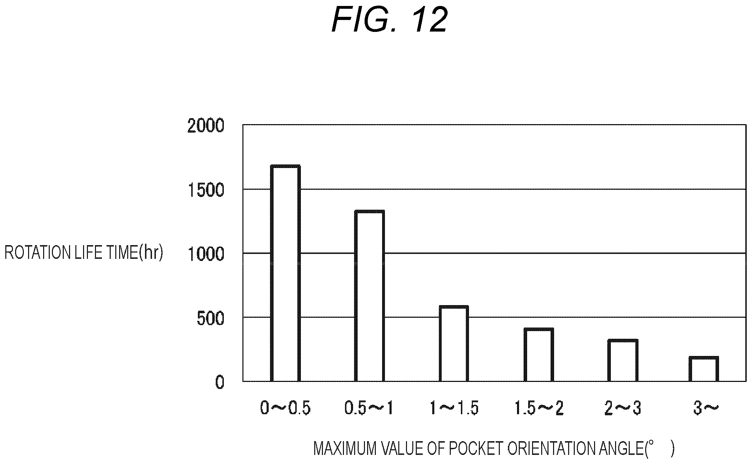

FIG. 12 shows test results when a maximum value of the orientations of the centers C of all the pockets P is changed with respect to the condition (iv) in a state in which the conditions (i) to (iii), (v), and (vi) are satisfied. As can be seen from the results, when the maximum value of the orientations of the centers C of all the pockets P is within 1°, a rotation life time of 1,000 hours or more is obtained.

With respect to the condition (v), when a sum of differences between angles, which are formed by a center of any one pocket P and centers of pockets P adjacent thereto on both sides, and 360°/number of pockets is within ± 0.1°, the rotation life can be further extended without breaking the cage.

Similarly, with respect to the condition (vi), when the variation in the bottom thicknesses T of the pockets P is 10 µm or less, the rotation life can be further extended without breaking the cage, and good acoustic performance can be ensured.

As described above, according to the deep groove ball bearing 10 according to the present embodiment, the roundness of the guide surface is 5 µm or less, the differences between the angles formed by the centers of the adjacent pockets and 360°/number of pockets are all within ± 0.1°, and the orientations of the centers of all the pockets are oriented to the one side in the circumferential direction and the one side in the axial direction from the outer diameter side toward the inner diameter side, whereby the vibration of the cage during bearing rotation can be reduced and the bearing life can be improved.

The present invention is not limited to the above embodiment and can be appropriately modified, improved, or the like.

In the above embodiment, the deep groove ball bearing is described as the ball bearing, and the ball bearing according to the present invention may also be an angular contact ball bearing.

The applicant performed the tests in FIGS. 10 to 12 described above using an angular contact ball bearing in which the double circular ring cage described above is incorporated, and confirmed that substantially the same test results were obtained.

The double circular ring cage is of the outer ring guide type in the above embodiment, and may also be of an inner ring guide type in which an inner circumferential surface of the circular ring portion serves as the guide surface.

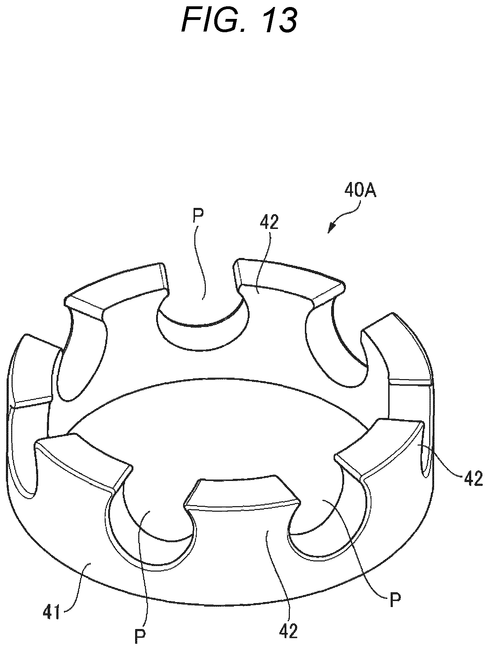

In addition, the double circular ring cage is described as the cage in the above embodiment, and the cage according to the present invention may also be a crown cage 40A including a partially cylindrical pocket P as shown in FIG. 13.

The present application is based on a Japanese Patent Application (No. 2022-020600) filed on February 14, 2022.

### REFERENCE SIGNS LIST

- 10: deep groove ball bearing (ball bearing)
- 11: ball
- 40: double circular ring cage (resin cage)
- 40A: crown cage (resin cage)
- 41: circular ring portion
- 42: column portion
- 46: outer circumferential surface (guide surface)
- A1 to A4: area
- P, P1 to P7: pocket

## Claims

1. A resin cage for a ball bearing, the resin cage comprising:
at least one circular ring portion; and
a plurality of column portions extending in an axial direction from the circular ring portion, wherein
balls of a ball bearing are rotatably holdable by cylindrical or partially cylindrical pockets formed between the column portions adjacent to each other, and the circular ring portion has a guide surface guided by an inner circumferential surface of an outer ring or an outer circumferential surface of an inner ring of the ball bearing,
a roundness of the guide surface is 5 µm or less,
differences between angles formed by centers of the pockets adjacent to each other and 360°/number of pockets are all within ± 0.1°, and
orientations of centers of all the pockets are oriented toward one side in a circumferential direction and one side in the axial direction from an outer diameter side toward an inner diameter side.

2. The resin cage for a ball bearing according to claim 1, wherein
a sum of differences between angles, which are formed by a center of any one of the pockets and centers of the pockets adjacent to the one pocket on both sides, and 360°/number of pockets is within ± 0.1°.

3. The resin cage for a ball bearing according to claim 1 or 2, wherein
the orientations of the centers of all the pockets are within 1°.

4. The resin cage for a ball bearing according to any one of claims 1 to 3, wherein
a variation in bottom thicknesses of the pockets is 10 µm or less.

5. The resin cage for a ball bearing according to any one of claims 1 to 4, wherein
the resin cage is a crown cage or a double circular ring cage including a pair of the circular ring portions.

6. A ball bearing comprising:
an outer ring whose inner circumferential surface is formed with an outer ring raceway groove;
an inner ring whose outer circumferential surface is formed with an inner ring raceway groove;
a plurality of balls rollably disposed between the outer ring raceway groove and the inner ring raceway groove; and
the resin cage for a ball bearing according to any one of claims 1 to 5.

## Patentansprüche

1. Kunststoff-Käfig für ein Kugellager, wobei der Kunststoff-Käfig umfasst:
wenigstens einen kreisförmigen Ringabschnitt; sowie
eine Vielzahl von Säulenabschnitten, die sich in einer axialen Richtung von dem kreisförmigen Ringabschnitt aus erstrecken, wobei
Kugeln eines Kugellagers von zylindrischen oder teilweise zylindrischen Taschen, die zwischen den zueinander benachbarten Säulenabschnitten ausgebildet sind, so aufgenommen werden können, dass sie rollen können, und wobei der zylindrische Ringabschnitt eine Führungsfläche aufweist, die von einer Innenumfangsfläche eines Außenrings oder einer Außenumfangsfläche eines Innenrings des Kugellagers geführt wird,
eine Rundung der Führungsfläche 5 µm oder weniger beträgt,
Differenzen zwischen Winkeln, die durch Mittelpunkte der zueinander benachbarten Taschen gebildet werden, und 360°/Anzahl von Taschen sämtlich innerhalb von ± 0,1° liegen; und
Ausrichtungen von Mittelpunkten aller Taschen zu einer Seite in einer Umfangsrichtung und einer Seite in der axialen Richtung von einer Außendurchmesser Seite in Richtung einer Innendurchmesserseite hin ausgerichtet sind.

2. Kunststoff-Käfig für ein Kugellager nach Anspruch 1, wobei
eine Summe von Differenzen zwischen Winkeln, die durch einen Mittelpunkt einer beliebigen der Taschen und Mittelpunkte der an die eine Tasche an beiden Seiten angrenzenden Taschen gebildet werden und 360°/Anzahl von Taschen innerhalb von ± 1° liegen.

3. Kunststoff-Käfig für ein Kugellager nach Anspruch 1 oder 2, wobei
die Ausrichtungen der Mittelpunkte aller Taschen innerhalb von 1° liegen.

4. Kunststoff-Käfig für ein Kugellager nach einem der Ansprüche 1 bis 3, wobei eine Variation von Bodendicken der Taschen 10 µm oder weniger beträgt.

5. Kunststoff-Käfig für ein Kugellager nach einem der Ansprüche 1 bis 4, wobei
der Kunststoff-Käfig ein Kronenkäfig oder ein Doppelkammkäfig ist, der ein Paar der kreisförmigen Ringabschnitte aufweist.

6. Kugellager, das umfasst:
einen Außenring, dessen Innenumfangsfläche mit einer Laufbahn-Nut des Außenrings versehen ist,
einen Innenring, dessen Außenumfangsfläche mit einer Laufbahnnut des Innenrings versehen ist, eine Vielzahl von Kugeln, die zwischen der Laufbahn-Nut des Außenrings und der Laufbahn-Nut des Innenrings so angeordnet sind, dass sie rollen können; sowie
den Kunststoff-Käfig für ein Kugellager nach einem der Ansprüche 1 bis 5.

## Revendications

1. Cage en résine pour un roulement à billes, la cage en résine comprenant :
au moins une partie annulaire circulaire ; et
une pluralité de parties de colonne s'étendant dans une direction axiale à partir de la partie annulaire circulaire, dans laquelle les billes d'un roulement à billes peuvent être maintenues en rotation par des poches cylindriques ou partiellement cylindriques formées entre les parties de colonne adjacentes les unes aux autres, et la partie annulaire circulaire a une surface de guidage guidée par une surface circonférentielle intérieure d'un anneau extérieur ou une surface circonférentielle extérieure d'un anneau intérieur du roulement à billes,
la rondeur de la surface de guidage est inférieure ou égale à 5 µm,
les différences entre les angles formés par les centres des poches adjacentes les unes aux autres et 360°/nombre de poches sont toutes inférieures ou égales à +0,1°, et
les orientations des centres de toutes les poches sont orientées d'un côté dans la direction circonférentielle et d'un côté dans la direction axiale, d'un côté du diamètre extérieur vers un côté du diamètre intérieur.

2. Cage en résine pour un roulement à billes selon la revendication 1, dans laquelle
la somme des différences entre les angles formés par le centre de l'une des poches et les centres des poches adjacentes à l'une des poches des deux côtés, et 360°/nombre de poches, est inférieure ou égale à ±0,1°.

3. Cage en résine pour un roulement à billes selon la revendication 1 ou 2, dans laquelle
les orientations des centres de toutes les poches sont à 1° près.

4. Cage en résine pour un roulement à billes selon l'une quelconque des revendications 1 à 3, dans laquelle
une variation des épaisseurs de fond des poches est inférieure ou égale à 10 µm.

5. Cage en résine pour un roulement à billes selon l'une quelconque des revendications 1 à 4, dans laquelle
la cage en résine est une cage à couronne ou une cage à double anneau circulaire incluant une paire de parties d'anneau circulaire.

6. Roulement à billes comprenant :
une bague extérieure dont la surface circonférentielle intérieure est formée d'une rainure de chemin de roulement de la bague extérieure ;
une bague intérieure dont la surface circonférentielle extérieure est formée d'une rainure pour le chemin de roulement de la bague intérieure ;
une pluralité de billes disposées de manière à pouvoir rouler entre la rainure de la bague extérieure et la rainure de la bague intérieure ; et
la cage en résine pour un roulement à billes selon l'une quelconque des revendications 1 à 5.
